# EUROPEAN PATENT APPLICATION

(11) **EP 3 886 207 A1**
(43) Date of publication of application: **29.09.2021**
(21) Application number: 20305353.3
(22) Date of filing: 27.03.2020
(51) Int. Cl.: H01M 2/20, H01M 2/22, H01M 10/42, H01M 10/48

(54) **CELL CONNECTING SYSTEM FOR A VEHICLE BATTERY MODULE AND METHOD FOR MANUFACTURING THE CELL SYSTEM**

(71) Applicant: TE Connectivity Germany GmbH, 64625 Bensheim (DE); Tyco Electronics France SAS, 95300 Pontoise (FR)
(72) Inventor: HENLE, Martin, 73485 Unterschneidheim (DE); EBERHARDT, Szilard, 91550 Dinkelsbuehl (DE); DALINO, Olivier, 78600 Maisons Laffitte (FR); WAGNER, Marco, 67360 Lingenfeld (DE)
(74) Representative: Grünecker Patent- und Rechtsanwälte PartG mbB

(57) **Abstract**

The invention relates to a cell connecting system for a vehicle battery module, in particular for an electric or hybrid vehicle. It comprises a contact element for receiving an electrical pole of at least one battery cell, a sensing cable comprising a wire electrically and mechanically connecting a cell monitoring unit and the contact element. The cell connecting system is characterized in that the surface of the wire and/or the contact element comprises surface area enhancing features in the area of contact with each other. The surface area enhancing features improve the welding process as higher welding forces with more material transfer between the welding parts can be achieved. The invention also relates to a method to manufacture the cell connecting system.

## Description

The invention relates to a cell connecting system for a vehicle battery module, in particular for an electric or hybrid vehicle, comprising a contact element for receiving an electrical pole of at least one battery cell and a sensing cable comprising a wire electrically and mechanically connecting a cell monitoring unit and the contact element. The invention also relates to a method for attaching a sensing cable to a contact element of a cell connecting system as described above.

Cell connecting systems are known in the art, e.g. from DE102014219178A1 and are used in battery modules of electrical or hybrid vehicles to connect a plurality of battery cells with each other. To be able to monitor the status of the cells, it is necessary to monitor parameters, e.g. the cell temperature, the capacity or the loading status. To do so, a monitoring unit is electrically connected via an electrical cable to each one of the cells via the contact element of the cell connecting system.

To ensure a sufficient long lifetime of the battery module it is important to realize connections that are electrically and mechanically stable even in daily use during which vibrations, shocks etc. put mechanical stress onto the connections. The connection between the cable and the cell connecting system is realized using ultrasonic welding.

Car manufactures therefore impose strict requirements on the reliability of the connection. A 90° peel tension test, well known in the art, is carried out and the connection needs to support a Force of at least 7N before the connection breaks. During the 90° peel tension test a previously connected cable is bent to a 90° to be perpendicular to the contact surface. Then the force is measured at which the connection peels off. The machine capability characteristic value: Cmk should be larger than 1.67.

It is an object to improve the peeling force in a cell connecting system to further improve the reliability of the mechanical and therefore electrical condition to thereby improve the monitoring possibility of a battery.

The object of the invention is achieved with the cell connecting system for a vehicle battery module, in particular for an electric or hybrid vehicle, according to claim 1. The cell connecting system comprises a contact element for receiving an electrical pole of at least one battery cell, a sensing cable comprising a wire electrically and mechanically connecting a cell monitoring unit and the contact element. It is characterized in that the surface of the wire and/or the contact element comprises surface area enhancing features in the area of contact with each other. By enhancing the surface area compared to a smooth surface the mechanical contact force can be enhance due to a larger interacting surface.

According to an inventive variant, the surface area enhancing features can comprise a plurality of bumps. The contact surface area can be easily enhanced by forming bumps on the surface.

According to an inventive variant, the bumps can extend linearly, in particular in parallel to the longer side of the area of contact. Such a pattern can be easily realized

According to an inventive variant, the bumps can have a pyramidal shape, in particular a peaked pyramidal shape. Such a pattern even further enhances the surface area and provides contact flancs in different directions.

According to an inventive variant, the pyramidal shape can be a rectangular, in particular square base shape, and a flank-angle of about 30° to 60°, in particular 45°. According to an inventive variant, the bumps have a height of up to 0,5mm, in particular up to 0,2mm, more in particular a height of up to 0,1mm. According to an inventive variant, the peaks of directly neighbouring bumps can have a distance from each other of up to 5mm, in particular of up to 0,2mm. These dimensions lead to improved contact forces compared to flat smooth surfaces.

According to an inventive variant, the wire and the contact element can be welded together, in particular ultrasonic welded together. The surface area enhancing features allow a higher and more stable welding force because a higher material transfer can occur between the welding parts.

According to an inventive variant, the contact element and the wire can be made of different materials, in particular of aluminium respectively copper. The invention even allows to combine two different materials and to obtain satisfying connections. When using materials with a thin electric isolating oxide layer on the surface, it is preferable to realize the surface area enhancing features at least on this material.

According to an inventive variant, the cell connecting system can have a plurality of contact elements arranged in two rows, allowing a serial electrical connection of battery cells, and wherein one of mutually opposing contact elements is electrically and mechanically connected with the wire of the sensing cable.

According to an inventive variant, the sensing cable can comprise a plurality of parallel wires, in particular flat wires, embedded in an electrical isolation, wherein, wherein each one of the wires that is connected to a contact element is electrically and mechanically connected to a different one of the contact elements and wherein the electrical isolation is removed in each area of contact.

The object of the invention is also achieved with the method according to claim 12 for attaching a sensing cable to a contact element of a cell connecting system according to the embodiments as described above. The method comprises a step of realizing the surface area enhancing features using a stamping punch or scratching tool or by laser structuring. The method allows obtaining improved connection forces compared to a connection of smooth surfaces. At the same time, the structuring of the surface can break thin oxidation layers on the surface of the wire and/or the contact element. Therefore, at the moment of realizing the electrical connection between the two parts, the electrical contact is improved.

According to an inventive variant, the stamping punch or the scratching tool or the laser structuring is applied on the side of wire and/or the contact element on which the electrical and mechanical connection will be established.

According to an inventive variant, the electrical and mechanical connection can be realized via welding, in particular ultrasonic welding. The surface area enhancing features allow a higher and more stable welding force because a higher material transfer can occur between the welding parts.

The invention may be understood by reference to the following description taken in conjunction with the accompanying figures, in which reference numerals identify features of the invention.
Figure 1 illustrates a cell connecting system for a vehicle battery module according to the invention.
Figures 2a to 2c illustrate schematically variants of surface area enhancing features according to the invention.
Figure 3 illustrates a stamping punch with peaked pyramids to form surface enhancing features in a wire.
Figure 4 illustrates peel off forces for four practical examples according to the invention compared to a comparative example with smooth surface.

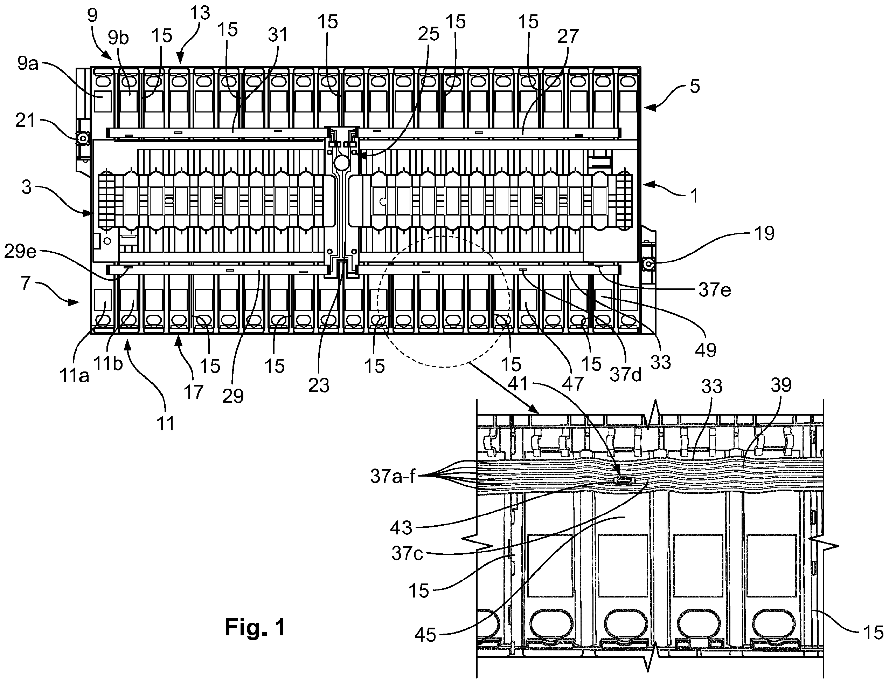

Figure 1 illustrates a cell connecting system 1 used for a battery module. Such a cell connecting system is used in electric or hybrid vehicles. It receives battery cells that are connected in parallel and serial to provide the energy to the electric motor of the vehicle.

The cell connecting system 1 comprises a support 3, typically made out of plastic, onto which two rows 5, 7 of a plurality of contact elements 9 and 11, typically made of aluminium, are mount, e.g. using a snap fit connection. In this embodiment, each contact element 9 and each contact element 11 comprises two contact element sections 9a, 9b and 11a, 11b respectively. The two contact element sections 9a, 9b are electrically connected to each other. The contact sections 11a, 11b are also electrically connected to each other.

In use, a battery cell is positioned with its electrical plus and minus poles onto opposing contact sections. Thus, one battery cell on contact element section 9a, 11a and one battery cell on contact element sections 9b, 11b. Therefore, the battery cells are arranged in parallel. In a variant, less or more than two cells could be arranged in parallel. The battery cell is usually welded to the contact element sections to ensure a reliable electrical and mechanical connection.

In row 5, the neighbouring contact element 13 is electrically isolated from the contact element 9 via an isolating element 15, usually integrally formed with the support. In the opposing row, the neighbouring contact element 17 is electrically connected to the contact element 11. Thus, the battery cells mount on contact elements 13 and 17 will be mount in series with respect to the battery cells mount on contact elements 9 and 11. The arrangement of pairs of battery cells in parallel connected in series with the neighbouring pair of battery cell is realized over the entire rows 5 and 7. Thus, pairs of electrically connected contact elements are separated from the subsequent pair of electrically connected elements by an isolating element 15. In this embodiment, only the contact element 9 in row 5 and the contact element 49 in row 7 are not electrically connected to a neighbouring contact element.

The cell connecting system 1 is connected to neighbouring cell connecting systems or the motor via the bus bars 19 and 21.

The cell connecting system 1 further comprises a printed circuit board (PCB) 23 with a cell monitoring unit 25. The monitoring unit 25 on the PCB 23 is electrically connected to at least some of the contact elements 9, 11, 13, 15 to monitor a parameter of the battery cell, e.g. temperature, capacitance or its charging state. The connection is realized using flat flexible cables 27, 29, 31 and 33.

As can be seen in the enlarged view 35, the flat flexible cable 33, comprises a plurality, here six, parallel wires 37a-f, here copper wires, isolated from each other by an electrical isolation 39, in this embodiment embedded in an extruded PVC. Three of the wires, 37c, 37d and 37e are electrically and mechanically connected to one and only one contact element, here 45, 47 and 49. In addition, as can be seen on Figure 1, each pair of opposing contact elements only has one wire connected. Here wire 37d and contact element 47, whereas the opposing contact element in row 5 is without connection to the flexible flat cable 27 to monitor the battery cells mount. Concerning the opposing contact elements 9a and 11a, both elements are connected to their corresponding flexible flat cable 29 and 31.

The flexible flat cable 33 has an exposed region 41, in which the wire 43, corresponding to wire 37c, is devoid of its electrical isolation. Wire 43 is welded to the contact element 45, typically by ultra sound welding. To carry out the ultrasonic welding, also the side opposite to where the contact with the contact element 45 is realized needs to be devoid of the electrical isolation 39 as can be seen in Figure 1, as a the sonotrode using to carry out the welding needs to be positioned onto the wire. Usually, the surface, onto which the sonotrode was applied, carries a visible imprint of the sonotrode's contact surface

According to the invention, the exposed region 41 facing the contact element 45 comprises surface area enhancing features, like bumps. In this context, surface area enhancing feature means a surface with a larger area than a smooth surface of the copper wire, obtained after removal of the electrical isolation 39 e.g. using a CO2 laser and subsequent cleaning, like a mechanical cleaning using metal and/or plastic brushes, e.g. round brushes.

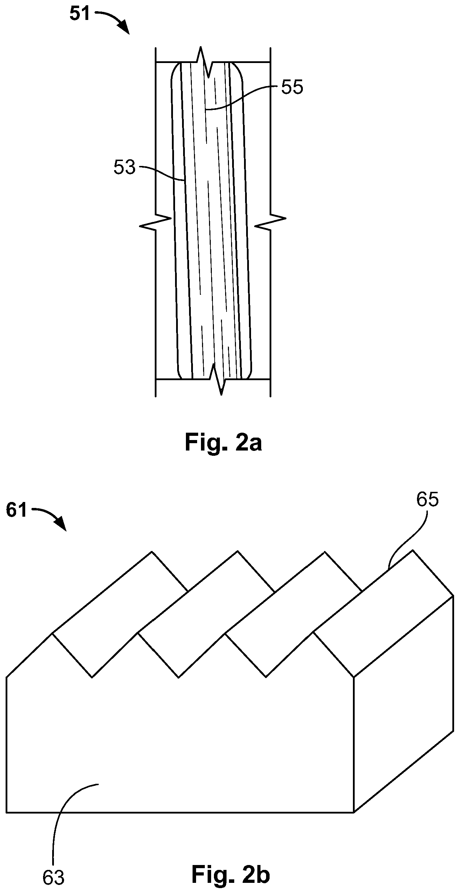

Figures 2a to 2c illustrate three different variants of surface area enhancing features on the exposed region 41 of the wire 43 according to the invention. The surface area enhancing features are on the side of the wire that will be in contact with the contact element 45 as shown in Figure 1.

Figure 2a illustrates the surface of the exposed region 51 of wire 53 after the application of a scratching tool. Scratches 55 are preferably provided over the entire surface of the exposed area and enhance the surface area compared to a smooth surface.

Figure 2b illustrates the surface of the exposed region 61 of wire 63 after the application of a stamping punch, leading to patterned surface area enhancing features in the form of linear bumps 65 extending along the longer side of exposed region 61. In a further variant, the linear bumps 65 could extend along the short side or be oblique. In this embodiment, all linear bumps 65 have the same shape. In a variant, they could also be different, e.g. higher towards the edge. The linear bumps 65 have a height of up to 0,5mm, in particular up to 0,2mm, more in particular a height of up to 0,1mm. Furthermore the peaks of directly neighbouring bumps have a distance from each other of up to 5mm, in particular of up to 0,2mm.

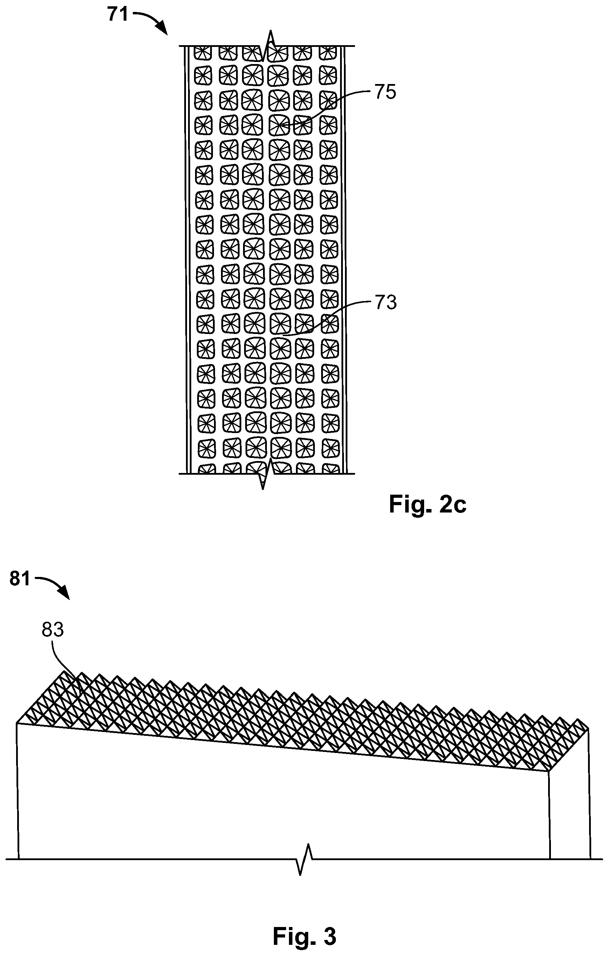

Figure 2c illustrates the surface of the exposed region 71 of wire 73 after the application of a stamping punch 81, as illustrated in figure 3, leading to patterned surface area enhancing features in the form of an array of pyramids 75 over the entire exposed region 71. In this embodiment, the pyramids 75 are peaked pyramids with an essentially rectangular, in particular essentially square based shape, and a flank-angle of about 30° to 60°, in particular 45°. The pyramids 75 have a height of up to 0,5mm, in particular up to 0,2mm, more in particular a height of up to 0,1mm. Furthermore, the peaks of directly neighbouring pyramids have a distance from each other of up to 5mm, in particular of up to 0,2mm.

As shown in Figure 3, the stamping punch 81 comprises an array of regularly arranged pyramids 83.

Instead of embossing the surface area enhancing features into the surface of the wire 63 or 73, it is also possible to use a laser patterning process.

The invention also relates to a method for attaching a sensing cable to a contact element of a cell connecting system as described above and comprising the steps of, removing the electrical isolation 39 from the flexible flat cables 27 to 33 to form exposed regions 41, 51, 61, 71. Cleaning the exposed regions. This step is then followed by a surface area enhancing features forming step using a stamping punch or scratching tool or by laser structuring to obtain one of the structures as shown in Figures 2a, 2b or 2c. Subsequently, the electrical and mechanical connection between the exposed regions 41, 51, 61, 71 of the wires 43, 53, 63, 73 is realized via welding, in particular ultrasonic welding.

According to a variant, the forms as illustrated in Figures 2a to 2c could also or alternatively be provided on the surface of the contact element 45.

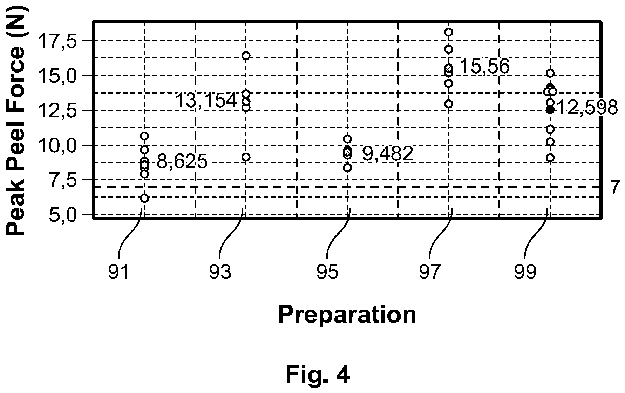

Figure 4 illustrates the results obtained after a 90° peel tension test as described above, the test satisfying Cmk >1,67. It shows the individual measurements and the average value.

For all samples the same materials, Aluminium and Copper were used for the contact element respectively the wire and the same ultrasonic process was applied.

Sample 91 corresponds to a comparative sample having a smooth surface. As can be seen the peel tension test is satisfying as the average value of 8,625 N is higher than the needed 7 N, see dotted horizontal line. One of the measurements was below 7 N

Sample 93 corresponds to surface area enhancement features in the form of peaked pyramids as illustrated in Figure 2c. They were obtained by using a stamping punch as illustrated in Figure 3. The peaked pyramids on the wire essentially show a square ground surface along the 0° and 90° direction, and on average present a distance between the peaks of 0,4mm, a height of 0,2 mm and a flank angle of 45°. The average peel off force obtained is 13,154N with all measurements above 7N.

Sample 95 corresponds to surface area enhancement features in the form of linear pumps as illustrated in Figure 2b, a distance between the peaks of 0,2mm, a height of 0,1mm and a flank angle of 45°. The average peel off force obtained is 9,482N with all measurements above 7N.

Sample 97 corresponds to surface area enhancement features in the form of peaked pyramids as illustrated in Figure 2c. They were obtained by using a stamping punch as illustrated in Figure 3. The peaked pyramids on the wire essentially show a square ground surface along the 0° and 90° direction, and on average present a distance between the peaks of 0,2mm, a height of 0,1mm and a flank angle of 45°. The average peel off force obtained is 15,56N with all measurements above 7N.

Sample 99 corresponds to surface area enhancement features in the form of scratches. The average peel off force obtained is 12,598N with all measurements above 7N.

All samples according to the invention have a higher peel off force compared to a wire with a smooth surface. The best results are obtained with Sample 97 showing an improvement of about 80% to the comparative sample.

A number of embodiments of the invention have been described. Nevertheless, it is understood that various modifications and enhancements may be made without departing the following claims.

### REFERENCE NUMERALS

- 1: cell connecting system
- 3: support
- 5: row
- 7: second row
- 9: contact element
- 9a, 9b: contact element section
- 11: contact element
- 11a, 11b: contact element section
- 13: neighbouring contact element
- 15: isolating element
- 17: neighbouring contact element
- 19: bus bar
- 21: bus bar
- 23: printed circuit board (PCB)
- 25: cell monitoring unit
- 27: flexible flat cable
- 29: flexible flat cable
- 31: flexible flat cable
- 33: flexible flat cable
- 35: enlarged view
- 37a -f: wires
- 39: electrical isolation
- 41: exposed region
- 43: wire in exposed region
- 45: contact element
- 47: contact element
- 49: contact element
- 51: exposed region
- 53: wire
- 55: surface scratch as surface area enhancing feature
- 61: exposed region
- 63: wire
- 65: linear bumps as surface area enhancing feature
- 71: exposed region
- 73: wire
- 75: peaked pyramids as surface area enhancing feature
- 81: stamping punch with peaked pyramids
- 91: comparative example
- 93: punched big pyramids
- 95: punched linear bumps
- 97: punched small pyramids
- 99: scratched surface area enhancing features

## Claims

1. A cell connecting system for a vehicle battery module, in particular for an electric or hybrid vehicle, comprising
- a contact element (9, 11) for receiving an electrical pole of at least one battery cell
- a sensing cable (27, 29, 31, 33) comprising a wire (37a-e) electrically and mechanically connecting a cell monitoring unit (25) and the contact element (9, 11),
**characterized in that**
the surface of the wire and/or the contact element comprises surface area enhancing features (55, 65, 75) in the area of contact with each other.

2. The cell connecting system according to claim 1, wherein the surface area enhancing features (65, 75) comprise a plurality of bumps.

3. The cell connecting system according to claim 2, wherein the bumps (65) extend linearly, in particular in parallel to the longer side of the area of contact.

4. The cell connecting system according to claim 2, wherein the bumps have a pyramidal shape (75), in particular a peaked pyramidal shape.

5. The cell connecting system according to claim 4, wherein the pyramidal shape (75) has a rectangular, in particular square base shape, and a flank-angle of about 30° to 60°, in particular 45°.

6. The cell connecting system according to one of claims 2 to 5, wherein the bumps (55, 65, 75) have a height of up to 0,5mm, in particular up to 0,2mm, more in particular a height of up to 0,1mm.

7. The cell connecting system according to one of claims claim 2 to 6, wherein the peaks of directly neighbouring bumps (65, 75)b have a distance from each other of up to 5mm, in particular of up to 0,2mm.

8. The cell connecting system according to one of claims 1 to 7, wherein the wire (53, 63, 73) and the contact element (45) are welded together, in particular ultrasonic welded together.

9. The cell connecting system according to one of claims 1 to 8, wherein the contact element (45) and the wire (53, 63, 73) are made of different materials, in particular of aluminium respectively copper.

10. The cell connecting system according to one of claims 1 to 9, comprising a plurality of contact elements arranged in two rows (5, 7), allowing a serial electrical connection of battery cells, and wherein one of mutually opposing contact elements is electrically and mechanically connected with the wire of the sensing cable (27, 29, 31, 33).

11. The cell connecting system according claim 10, wherein the sensing cable (27, 29, 31, 33) comprises a plurality of parallel wires (37a-f), in particular flat wires, embedded in an electrical isolation (39), wherein each one of the wires that are connected to a contact element is electrically and mechanically connected to a different one of the contact elements and wherein the electrical isolation is removed in each area of contact.

12. Method for attaching a sensing cable to a contact element of a cell connecting system according to one of claims 1 to 11, wherein the surface area enhancing features are realized using a stamping punch (81) or scratching tool or by laser structuring.

13. Method for attaching a sensing cable to a contact element according to claim 12, wherein the stamping punch (81) or the scratching tool or the laser structuring is applied on the side of wire and/or the contact element on which the electrical and mechanical connection will be established.

14. Method for attaching a sensing cable to a contact element according to claim 12 or 13, wherein the electrical and mechanical connection is realized via welding, in particular ultrasonic welding.
